# EUROPEAN PATENT SPECIFICATION

(11) **EP 3 248 231 B1**
(45) Date of publication and mention of the grant of the patent: **12.02.2020**
(21) Application number: 15823503.6
(22) Date of filing: 18.12.2015
(51) Int. Cl.: H01M 10/42, H01M 10/54, H01M 10/052, H01M 10/48, G01D 4/00

(54) **SEPARABLE ENDPOINTS AND METHODS OF USING THE SAME**
TRENNBARE ENDPUNKTE UND BENÜTZUNGSVERFAHREN DAFÜR
POINTS D'EXTRÉMITÉ SÉPARABLES ET MÉTHODES LES UTILISANT

(30) Priority: 20.01.2015 US 201514601076
(43) Date of publication of application: 29.11.2017
(73) Proprietor: Itron Global SARL, Liberty Lake WA 99019 (US)
(72) Inventor: TISSIER, Ronan, 69001 Lyon (FR); BULTEAU, Serge, 69840 Julienas (FR); GUILLOT, Denis, 01310 Buellas (FR)
(74) Representative: Morrall, Jonathan Ian McLachlan
(86) International application number: PCT/EP2015/080494
(87) International publication number: WO 2016/116234

(56) References cited:
- FR-A1- 2 634 966
- US-A- 4 977 042
- US-A1- 2011 104 544
- US-B1- 6 429 547

## Description

### FIELD OF THE DISCLOSURE

This disclosure relates generally to endpoints and, more particularly, to separable endpoints and methods of using the same.

### BACKGROUND

Utility providers install, maintain, and/or collect utility usage data from endpoints within automatic meter reading (AMR) collection networks. These endpoints are data collection and transmission devices that are either installed on existing utility meters or are integrated into utility meters. Often, the endpoints communicate with data collection units (DCU) through radio frequency (RF) communication. Some endpoints transmit meter data at periodic intervals without any external prompting. US4977042 discloses a rechargeable type small electric appliance.

### BRIEF DESCRIPTION OF THE DRAWINGS

FIG. 1 illustrates an example separable endpoint in accordance with the teachings of this disclosure.
FIG. 2 illustrates an isometric expanded view of an example endpoint that can be used to implement the example endpoint of FIG. 1.
FIG. 3 illustrates a diagram illustrating example stages of separating the example endpoint of FIG. 2 in accordance with the teachings of this disclosure.
FIG. 4 illustrates an isometric expanded view of another example endpoint that can be used to implement the example endpoint of FIG. 1.
FIG. 5 illustrates an isometric view of the example endpoint of FIG. 4.

The figures are not to scale. Wherever possible, the same reference numbers will be used throughout the drawing(s) and accompanying written description to refer to the same or like parts.

### DETAILED DESCRIPTION

Some endpoints are resin-potted in a single block that encapsulates the batteries and the electronics (e.g., printed circuit board (PCB)) to substantially ensure tightness and/or substantially protect the batteries and/or electronics from, for example, moisture. The batteries of some of these endpoints are soldered directly to the PCB. Because these batteries are resin-potted and directly soldered to the PCB, separating the batteries from the PCB to comply with some recycling initiatives (e.g., European directive 2012/19/EU, waste of electrical and electronic equipment (WEEE), and European battery directive, 2006/66/EC) may be difficult.

To ease compliance with recycling and/or disposal initiatives, the examples disclosed herein relate to endpoints that include batteries in a location distinct from other electrical components. In some examples, the example endpoints include a resin potted block having two separable compartments and/or portions in which the first compartment is designated and/or configured to receive battery devices (e.g., lithium batteries) and the second compartment is designated and/or configured to receive other electrical components. In some examples, the separation and/or demarcation between the compartments of the endpoint is indicated using a line of weakness, an area of weakness (e.g., thinner walled area(s), less resin), a connective portion and/or bridge or some other indication (e.g., scoring, pattern of weakness, groove, visual inscription and/or marking, etc.). Regardless of how the separation between the compartments is shown and/or accomplished, the compartments of the endpoint are configured to be easily separated manually or using a mechanical process such as shearing (e.g., using a saw, a press, etc.) and/or otherwise decoupling the compartments from one another. After the compartments are separated, the first compartment housing the battery devices and the second compartment housing the other electrical components can be easily and inexpensively placed into the appropriate network for electronic end-of-life management (e.g., electronic recycling).

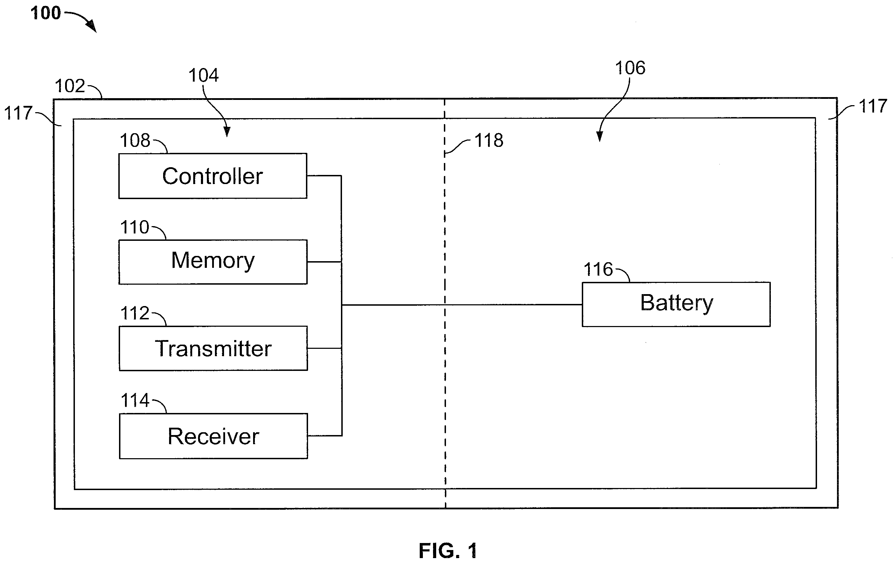

FIG. 1 illustrates an example endpoint 100 in accordance with the teachings of this disclosure. In some examples, the endpoint 100 is a water-based endpoint that is to be disposed in a water pit and coupled (e.g., physically and/or communicatively coupled) to a utility meter (e.g., water meter) to enable consumption data from the utility meter to be conveyed from the water pit to, for example, a data collection unit. The endpoint 100 may be made of a thermoplastic material, a stainless steel material, a metal material, a plastic material, a rubber material, a non-thermoset material, material(s) capable of flowing (e.g., liquefying under heat) and resolidifying (e.g., wax, thermoplastic, metal), and/or a liquid crystal polymer(s). However, the endpoint 100 may be made of any suitable material.

As shown in the example of FIG. 1, the endpoint 100 includes a housing 102 having a first compartment 104 and a second compartment 106 that respectively house components 108, 110, 112, 114, 116, (e.g., a controller 108, a memory 110, a transmitter 112, a receiver 114 and a battery 116). In this example, the components 108, 110, 112, 114, 116 enable the endpoint 100 to receive and/or transmit data relating to, for example, water consumption. In this example, to facilitate recycling and/or separating the battery 116 from the remaining components 108, 110, 112, 114, the controller 108, the memory 110, the transmitter 112 and the receiver 114 are disposed in the first compartment 104 and/or are disposed on a populated printed circuit board and the battery 116 is disposed in the second compartment 106 and/or are disposed on and/or adjacent an unpopulated printed circuit board. The compartments 104, 106 include a resin-potted block(s) 117 to substantially prevent and/or reduce the components 108, 110, 112, 114, 116 from being exposed to, for example, moisture. While not shown in the example of FIG. 1, the first and second compartments 104, 106 may be differently shaped (e.g., different height, width, etc.) and/or differently configured. For example, the transmitter 112 and/or receiver 114 may be configured as a horizontally polarized antenna and/or a vertically polarized antenna and the housing 102 may be adapted to house the different antennas, etc. While the example first and second compartments 104, 106 are illustrated as being similarly sized, the example compartments 104, 106 may be differently sized, may be coupled in different ways, may be differently arranged (e.g., side-by-side, upside down, etc.), etc.

To separate the first compartment 104 and the second compartment 106, an operator may shear the endpoint 100 along, for example, a border or demarcation 118 between the first and second compartments 104, 106. The border 118 may be configured as a line of weakness, an area of weakness, an indicator or marking, a groove, a score, a partial perforation that does not fully penetrate the housing 102, another compartment of the housing 102, etc. In some examples, to further ease the separation of the first and second compartments 104, 106, walls of the endpoint 100 at the border 118 may be thinner or otherwise weaker than other walls of the endpoint 100 elsewhere. Once the first and second compartments 104, 106 are separated, the compartments 104, 106 and the corresponding components 108, 110, 112, 114, 116 can be introduced into the appropriate network for electronic end-of-life management (e.g., electronic recycling). For example, the first compartment 104 including the corresponding components 108, 110, 112, 114 may be directed toward an electronic recycling network and the second compartment 106 including the battery 116, the unpopulated printed circuit board and/or the corresponding resin may be directed toward a battery recycling network.

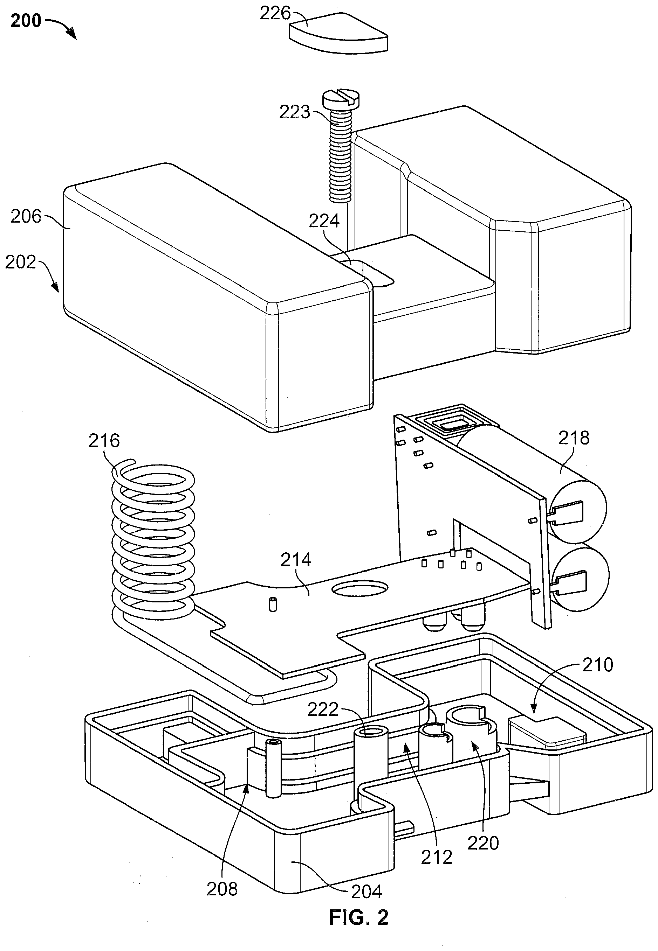

FIG. 2 illustrates an isometric expanded view of an example endpoint 200 that can be used to implement the example endpoint 100 of FIG. 1 According to the invention, the endpoint 200 includes a housing 202 having a first half or portion 204 and a second half or portion 206 that form a first compartment 208, a second compartment 210 and a connecting portion and/or third compartment 212 therebetween. In some examples, the connecting portion 212 serves as a demarcation indicating the boundary between the first and second compartments 208, 210. To facilitate separating the first and/or compartments 208, 210 through the connecting portion 212, the connecting portion 212 includes a line of weakness (e.g., grooves, a score, a perforation, etc.) and/or have walls that are thinner than walls of the first and second compartments 208, 210. The line of weakness (e.g., demarcation) may include a groove, a partial perforation, a score, a scratch, a line made with a cutting instrument, bores that do not fully penetrate through the connecting portion 212, a series of holes and/or a pattern, etc. In other examples, the demarcation may include a marking any other type of indicator.

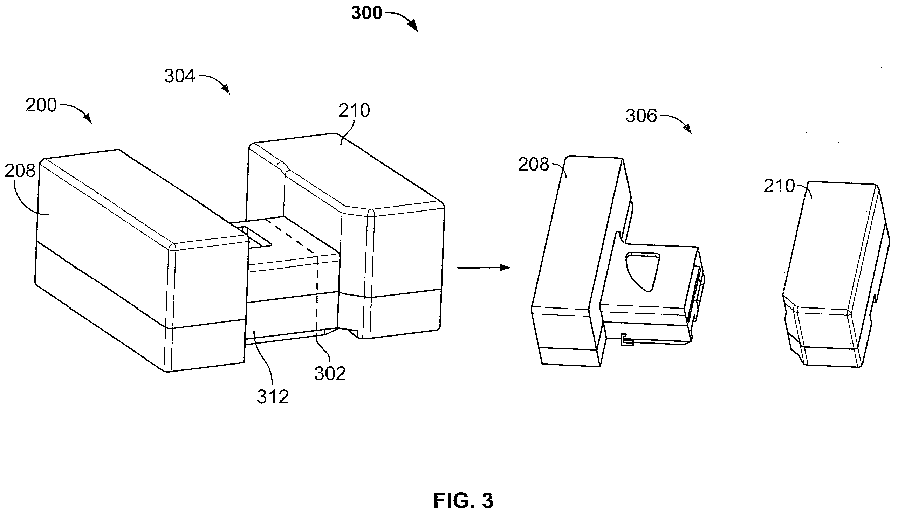

In this example, the first compartment 208 houses a printed circuit board 214 and an antenna 216 and the second compartment 210 houses batteries 218 that may not be directly soldered to the printed circuit board 214. The printed circuit board 214, the antenna 216 and the batteries 218 may be used in combination to obtain and/or convey consumption data from a utility meter to, for example, a data collection unit. In this example, the antenna 216 is a horizontally polarized antenna. However, other antenna types may be used instead. Also, in this example, the first and/or second halves 204, 206 include locators (e.g., pegs, receptacles, etc.) 220 that facilitate locating and/or coupling the first and second halves 204, 206 relative to one another and/or facilitate locating and/or coupling the printed circuit board 214, the antenna 216 and/or the batteries 218 to and/or within the first and/or second halves 204, 206. In some examples, one of the locators 220 is a through hole 222 that receives a fastener 223 to couple the endpoint 200 to a meter. The fastener 207 may be positioned in and/or may extend through an aperture 224 defined by the second half 206. In the example of FIG. 2, once the fastener 207 is positioned within the aperture 224, a cover and/or plug 226 and/or sealant (e.g., epoxy, etc.) may be disposed within the aperture 224 (See, FIG. 3) to prevent moisture and/or debris from entering the endpoint 200. In some examples, when the halves 204, 206 are coupled together, the housing 202 is sealed (e.g., hermetically sealed) from the environment.

FIG. 3 illustrates an example diagram 300 illustrating example stages of separating the first and second compartments 208, 210 of the example endpoint 200 along a line of demarcation 302 of the connecting portion 212. The line of demarcation 302 may be a visual marking, a groove, a line of weakness, an area of weakness or any other structure and/or indicator (e.g., lettering on the housing 202) that suggests that the first and second compartments 208, 210 should be separated along and/or adjacent the line of demarcation 302. However, in other examples, the endpoint 200 does not include the line of demarcation 302 or the line of demarcation 302 may include the connecting portion 212 in, for example, its entirety, more or less its entirety (e.g., more than half) or a portion or area of the connecting portion 212.

At 304 of FIG. 3, the endpoint 200 is shown prior to the first and second compartment 208, 210 being separated. At 306, the endpoint 200 is shown after the first and second compartments 208, 210 are separated along the line of demarcation 302. In some examples, separating the first and second compartments 208, 210 enables the batteries 216 housed in the second compartment 210 to enter the appropriate electronic end-of-life management network and for the other components 108, 110, 112, 114 to enter the appropriate electronic end-of-life network.

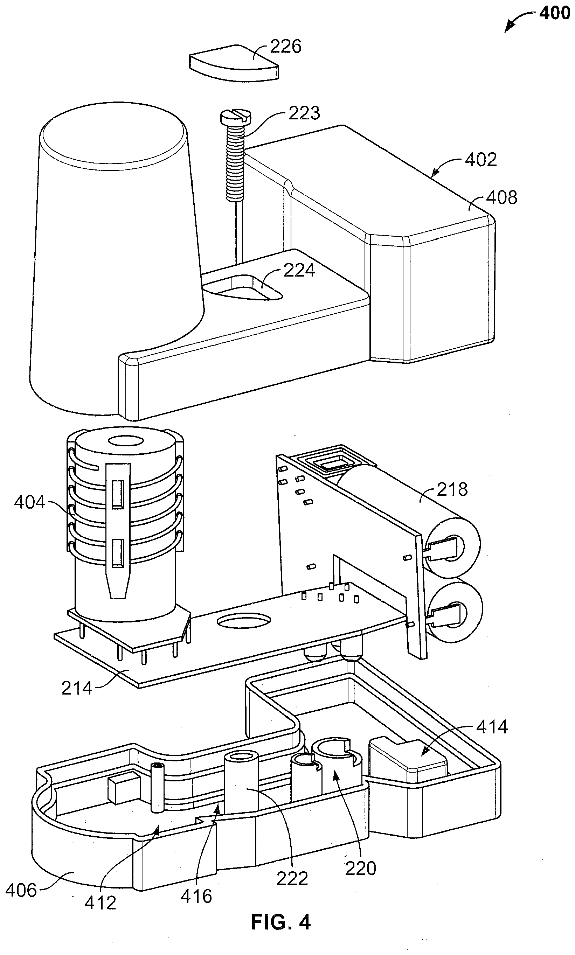

FIG. 4 illustrates an isometric expanded view of another example endpoint 400 that can be used to implement the example endpoint 100 of FIG. 1. The example endpoint 400 is similar to the example endpoint 200 of FIG. 2. However, a housing 402 of the endpoint 400 is designed to accommodate an antenna 404 that is configured, in this example, as a vertically polarized antenna. In the example of FIG. 4, the endpoint 400 includes a first half or portion 408 and a second half or portion 410 that form a first compartment 412, a second compartment 414 and a connecting portion or third compartment 416 that couples the first and second compartments 412, 414. As with the example endpoint 200 of FIG. 2, the first compartment 412 of FIG. 4 houses the printed circuit board 214 and the antenna 404 and the second compartment 414 houses the batteries 218. In some examples, when the halves 408, 410 are coupled together, the housing 402 is sealed (e.g., hermetically sealed) from the environment.

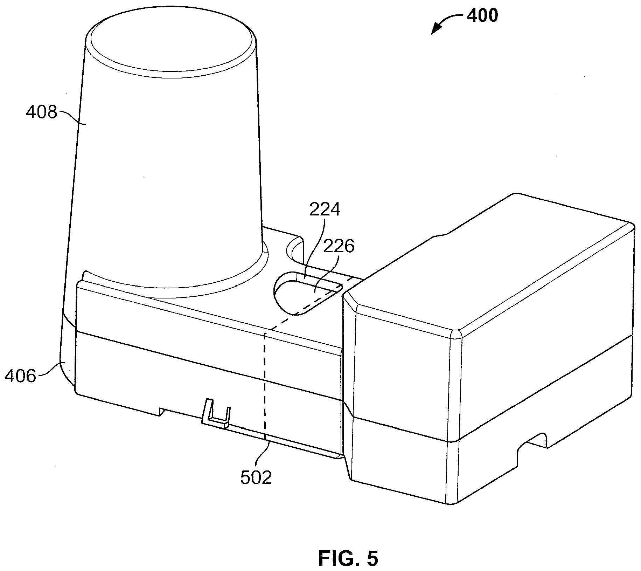

FIG. 5 illustrates an isometric view of the example endpoint 400 with the halves 406, 408 coupled together and a line of demarcation 502 shown in the connecting portion 416 and the plug 226 disposed in the aperture 224. In other examples, the endpoint 400 does not include the line of demarcation 502 or the line of demarcation 502 may include the connecting portion 416 in, for example, its entirety, more or less its entirety (e.g., more than half) or a portion or area of the connecting portion 416.

The examples disclosed herein relate to separable endpoints (e.g., water or gas based endpoints,) and methods of making and/or using such endpoints. In some examples, the example endpoints are disposed in a water pit and coupled (e.g., physically and/or communicatively coupled) to a utility meter (e.g., water meter) to enable consumption data from the utility meter to be conveyed from the water pit to, for example, a data collection unit. In contrast to some endpoints, the examples disclosed herein are configured to enable recyclability, separation and/or extraction of components (e.g., batteries) from other components (e.g., electronics) to comply with certain initiatives (e.g., European directive 2006/66/EC and 2012/19/EU (WEEE)) that encourage recycling and/or safely disposing of batteries. In some examples, the example endpoint includes a housing having first and second compartments connected by a breakable and/or cuttable portion (e.g., demarcation). In some examples, an example battery is disposed within the first compartment and example electronics and/or an antenna are disposed within the second compartment. In some examples, the breakable and/or cuttable portion includes one or more lines of weakness to encourage its breakability and/or includes first walls that are thinner than second walls of the first and/or second compartments to encourage breakability.

As set forth herein, an example apparatus includes a housing having a first compartment and a second compartment, a demarcation of the housing separates the first and second compartments. The example apparatus also includes a battery disposed in the first compartment and electronic components disposed in the second compartment. The electronic components are coupled to the battery through the demarcation. The housing is configured to be separated along or adjacent to the demarcation to enable at least one of the battery or the electronic components to enter an electronic end-of-life management network.

In some examples, the battery includes a lithium battery. In some examples, the battery is to be disposed of separately from the electronic components. In some examples, the battery is not directly soldered to the PCB. According to the invention, the electronic components are resin-potted. In some examples, the demarcation is a third compartment that is disposed between the first and second compartments. In some examples, the housing includes first and second portions that are coupled together to form the first and second compartments. In some examples, the apparatus is a water-based endpoint.

In some examples, the demarcation is a line or area of weakness. In some examples, the demarcation is a groove. In some examples, the demarcation is a score. In some examples, the demarcation is an indicator. In some examples, the demarcation is a perforation. In some examples, the electronic components include one or more of a controller, a memory, a transmitter, an antenna, a printed circuit board, or a receiver. In some examples, the housing forms a sealed endpoint. In some examples, the sealed endpoint is a water based endpoint.

An example method includes separating first and second compartments of a housing along or adjacent to a demarcation of the housing, the demarcation separates the first and second compartments, a battery is disposed within the first compartment and electronic components are disposed within the second compartment, prior to separation, the battery is coupled to the electronic components through the demarcation. The method also includes entering at least one of the first compartment or the second compartment into an electronic end-of-life network.

In some examples, separating the first and second compartments includes shearing the first and second compartments along or adjacent the demarcation. In some examples, the housing is a water-based endpoint. In some examples, the demarcation is a line of weakness, an area of weakness, a groove, a score, an indicator, or a perforation.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1. An apparatus (100), comprising:
a housing (102) comprising:
a first compartment (104) and a second compartment (106), and
a third compartment (212) between the first and second compartments, the third compartment including a line of weakness;
a battery (116) disposed in the second compartment; electronic components (108, 110, 112, 114) disposed in the first compartment, the electronic components coupled to the battery through the third compartment, the housing configured to be separable along or adjacent to the line of weakness to enable at least one of the battery or the electronic components to enter an electronic end-of-life management network;
wherein each of the first and second compartments comprises a resin-potted block, to substantially prevent the battery and the electronic components from being exposed to moisture.

2. The apparatus of claim 1, wherein the battery comprises a lithium battery.

3. The apparatus of claim 1 or 2, wherein the battery is to be disposed of separately from the electronic components.

4. The apparatus of any preceding claim, wherein the housing comprises first and second portions that are coupled together to form the first and second compartments.

5. The apparatus of claim 4, wherein the housing is hermetically sealed when the first and second portions are coupled.

6. The apparatus of claim 5, further including a fastener that extends through the first and second compartments to attach the apparatus to a meter.

7. The apparatus of any preceding claim, wherein the apparatus comprises a water-based endpoint.

8. The apparatus of any preceding claim, wherein the electronic components comprise a printed circuit board.

9. The apparatus of any preceding claim, wherein the housing forms a sealed endpoint.

10. The apparatus of claim 9, wherein the sealed endpoint comprises a water based endpoint.

11. The apparatus of any preceding claim, wherein the electronic components disposed in the first compartment are a printed circuit board and a horizontally polarized antenna.

12. A method, comprising:
separating the first and second compartments of claim 1 along the line of weakness; and
entering at least one of the first compartment and the second compartment into the electronic end-of-life management network.

## Patentansprüche

1. Vorrichtung (100), die Folgendes umfasst:
ein Gehäuse (102), das Folgendes umfasst:
ein erstes Fach (104) und ein zweites Fach (106) und
ein drittes Fach (212) zwischen dem ersten und dem zweiten Fach, wobei das dritte Fach eine Sollbruchlinie aufweist;
eine Batterie (116), die in dem zweiten Fach angeordnet ist;
elektronische Komponenten (108, 110, 112, 114), die in dem ersten Fach angeordnet sind, wobei die elektronischen Komponenten durch das dritte Fach an die Batterie gekoppelt sind, wobei das Gehäuse konfiguriert ist, entlang der Sollbruchlinie oder an diese angrenzend trennbar zu sein, um der Batterie und/oder den elektronischen Komponenten zu ermöglichen, in ein elektronisches End-of-Life-Managementnetz einzutreten;
wobei jedes des ersten und des zweiten Fachs einen harzverkapselten Block umfasst, um im Wesentlichen zu verhindern, dass die Batterie und die elektronischen Komponenten Feuchtigkeit ausgesetzt werden.

2. Vorrichtung nach Anspruch 1, wobei die Batterie eine Lithiumbatterie umfasst.

3. Vorrichtung nach Anspruch 1 oder 2, wobei die Batterie getrennt von den elektronischen Komponenten zu entsorgen ist.

4. Vorrichtung nach einem vorhergehenden Anspruch, wobei das Gehäuse einen ersten und einen zweiten Teil umfasst, die zusammengekoppelt sind, um das erste und das zweite Fach zu bilden.

5. Vorrichtung nach Anspruch 4, wobei das Gehäuse luftdicht verschlossen ist, wenn der erste und der zweite Teil gekoppelt sind.

6. Vorrichtung nach Anspruch 5, die ferner eine Befestigung umfasst, die sich durch das erste und das zweite Fach erstreckt, um die Vorrichtung an einem Messgerät anzubringen.

7. Vorrichtung nach einem vorhergehenden Anspruch, wobei die Vorrichtung einen wasserbasierten Endpunkt umfasst.

8. Vorrichtung nach einem vorhergehenden Anspruch, wobei die elektronischen Komponenten eine Leiterplatte umfassen.

9. Vorrichtung nach einem vorhergehenden Anspruch, wobei das Gehäuse einen abgedichteten Endpunkt bildet.

10. Vorrichtung nach Anspruch 9, wobei der abgedichtete Endpunkt einen wasserbasierten Endpunkt umfasst.

11. Vorrichtung nach einem vorhergehenden Anspruch, wobei die elektronischen Komponenten, die in dem ersten Fach angeordnet sind, eine Leiterplatte und eine horizontal polarisierte Antenne sind.

12. Verfahren, das Folgendes umfasst:
Trennen des ersten und des zweiten Fachs gemäß Anspruch 1 entlang der Sollbruchlinie; und
Eingeben des ersten Fachs und/oder des zweiten Fachs in das elektronische End-of-Life-Managementnetz.

## Revendications

1. Appareil (100) comportant :
un boîtier (102) comportant :
un premier compartiment (104) et un deuxième compartiment (106), et
un troisième compartiment (212) entre les premier et deuxième compartiments, le troisième compartiment comprenant une amorce de rupture ;
une batterie (116) disposée dans le deuxième compartiment ;
des composants électroniques (108, 110, 112, 114) disposés dans le premier compartiment, les composants électroniques étant couplés à la batterie à travers le troisième compartiment, le boîtier configuré pour être séparable le long ou à proximité de l'amorce de rupture pour permettre à au moins un élément parmi la batterie et les composants électroniques d'entrer dans un réseau de gestion de fin de vie électronique ;
chacun des premier et deuxième compartiments comportant un bloc enrobé de résine, pour empêcher sensiblement la batterie et les composants électroniques d'être exposés à l'humidité.

2. Appareil selon la revendication 1, la batterie comportant une batterie au lithium.

3. Appareil selon la revendication 1 ou 2, la batterie devant être éliminée séparément des composants électroniques.

4. Appareil selon l'une quelconque des revendications précédentes, le boîtier comportant des première et deuxième parties qui sont couplées ensemble pour former les premier et deuxième compartiments.

5. Appareil selon la revendication 4, le boîtier étant hermétiquement scellé lorsque les première et deuxième parties sont couplées.

6. Appareil selon la revendication 5, comprenant en outre un élément d'assemblage qui s'étend à travers les premier et deuxième compartiments pour fixer l'appareil à un instrument de mesure.

7. Appareil selon l'une quelconque des revendications précédentes, l'appareil comportant un point de terminaison à base d'eau.

8. Appareil selon l'une quelconque des revendications précédentes, les composants électroniques comportant une carte à circuit imprimé.

9. Appareil selon l'une quelconque des revendications précédentes, le boîtier formant un point de terminaison étanche.

10. Appareil selon la revendication 9, le point de terminaison étanche comportant un point de terminaison à base d'eau.

11. Appareil selon l'une quelconque des revendications précédentes, les composants électroniques disposés dans le premier compartiment étant une carte à circuit imprimé et une antenne à polarisation horizontale.

12. Procédé comportant les étapes consistant à :
séparer les premier et deuxième compartiments de la revendication 1 le long de l'amorce de rupture ; et
faire entrer au moins un des premier et deuxième compartiments dans le réseau de gestion de fin de vie électronique.
